# EUROPEAN PATENT APPLICATION

(11) **EP 4 614 663 A1**
(43) Date of publication of application: **10.09.2025**
(21) Application number: 24216572.8
(22) Date of filing: 29.11.2024
(51) Int. Cl.: H01M 10/42, H01M 50/262, H01M 50/287, H01M 50/519

(54) **BATTERY MANAGEMENT SYSTEM AND BATTERY PACK**

(30) Priority: 07.03.2024 CN 202420446586 U; 06.09.2024 WO PCT/CN2024/117322
(71) Applicant: Eve Energy Co., Ltd., Huizhou, Guangdong 516006 (CN)
(72) Inventor: XIE, Hongyao, Huizhou, 516006 (CN)
(74) Representative: HGF

(57) **Abstract**

Provided are a battery management system and a battery pack. The battery pack includes a battery management system (100). The battery management system (100) includes a first circuit board (10), a second circuit board (20), a copper bar (30) and a fastening assembly (40). The first circuit board (10) and the second circuit board (20) are arranged at intervals and are fixed within a box body (200). The copper bar (30) is located between the first circuit board (10) and the second circuit board (20). The fastening assembly (40) includes an insulating member (41) and a first fastener (42). The copper bar (30) is disposed to be attached to the first circuit board (10). A first end of the insulating member (41) is connected to the second circuit board (20), and a second end of the insulating member (41) supports the copper bar (30).

## Description

### TECHNICAL FIELD

The present application relates to the technical field of batteries, for example, a battery management system and a battery pack.

### BACKGROUND

A battery management system (BMS) is an important component of a battery pack. The battery management system is disposed within a box body of the battery pack, and generally includes two circuit boards arranged at intervals in a vertical direction and a copper bar disposed between the two circuit boards. One end of the copper bar is electrically connected to the battery module within the battery pack, and the other end of the copper bar is generally located between the two circuit boards.

In the related art, in order to fix the copper bar closely to a circuit board on an upper layer to achieve the electrical connection, a common practice is as follows: a screw post is integrally formed on the box body, the screw post passes through a circuit board on a lower side and supports the copper bar, then a threaded hole is extruded on the screw post by using the tapping process, and the screw is fastened in the threaded hole, to fasten the copper bar on the circuit board on the upper layer.

In the above-described related art, the box body and the screw post are made of the metal, and the copper bar is in contact with the screw post; therefore the current on the copper bar flows to the box body through the screw post, so that the box body has an electric potential. However, the risk of short circuits may occur for the box body with the electric potential, and the risk of electric shocks may occur for an operator. Therefore, the insulation between the box body and the copper bar will be achieved subsequently by using an electrophoresis process, however, the electrophoresis process has the high cost and the complicated process, thereby resulting in the higher manufacturing cost of the product.

### SUMMARY

An embodiment of the present application provides a battery management system disposed within the box body. The battery management system includes a first circuit board and a second circuit board, a copper bar and a fastening assembly. The first circuit board and the second circuit board are arranged at intervals and fixed within the box body. The copper bar is located between the first circuit board and the second circuit board. The fastening assembly includes an insulating member and a first fastener. The copper bar is disposed to be attached to the first circuit board. A first end of the insulating member is connected to the second circuit board, and a second end of the insulating member supports the copper bar. The first fastener is fastenably connected to the insulating member and abuts against a side of the first circuit board away from the second circuit board, to fix the copper bar on the first circuit board.

An embodiment of the present application further provides a battery pack. The battery pack includes a box body, a battery module and the battery management system described in any of the embodiments. The battery module and the battery management system are disposed within the box body, and the battery module is electrically connected to the battery management system.

Some embodiments of the present application provide a battery management system. In this battery management system, the first circuit board and the second circuit board are arranged at intervals and are fixed within the box body, the copper bar is supported by the insulating member connected to the second circuit board, and the first fastener is fastenably connected to the insulating member and abuts against the side of the first circuit board away from the second circuit board, so that the copper bar is attached and fixed to the first circuit board, and thus the copper bar is fastenably connected to the first circuit board through the fastening assembly. The fastening assembly of the above-described form is provided so that the copper bar can be insulated from the box body while the copper bar is fastened, and the first fastener is not in contact with the box body; therefore, the copper bar may not form an electrical connection with the box body through the first fastener, thereby insulating and protecting the box body without using the electrophoresis process, and reducing the manufacturing cost.

According to the battery pack provided in some embodiments of the present application, the manufacturing cost can be reduced by providing the battery management system described above.

### BRIEF DESCRIPTION OF THE DRAWINGS

The accompanying drawings required for describing some embodiments will be introduced below, and the accompanying drawings described below are some accompanying drawings of the present application.
FIG. 1 is a schematic structural diagram of a battery pack according to some embodiments of the present application;
FIG. 2 is a sectional view of a battery pack according to some embodiments of the present application;
FIG. 3 is a schematic structural diagram of a battery management system according to some embodiments of the present application;
FIG. 4 is a sectional view of a battery management system according to some embodiments of the present application;
FIG. 5 is a schematic structural diagram of a fastening assembly according to some embodiments of the present application; and
FIG. 6 is a schematic structural diagram of an insulating member according to some embodiments of the present application, with a second fastener being omitted.

### List of reference numbers

- 100: battery management system
- 200: box body
- 300: battery module
- 201: first receiving cavity
- 202: second receiving cavity
- 10: first circuit board
- 11: pad
- 20: second circuit board
- 21: engaging hole
- 30: copper bar
- 40: fastening assembly
- 41: insulating member
- 411: plastic member
- 412: second fastener
- 413: receiving hole
- 414: snap
- 4141: engaging groove
- 415: limit groove
- 416: stiffener
- 42: first fastener

### DETAILED DESCRIPTION

The present application will be described below in conjunction with the accompanying drawings and embodiments. The embodiments described herein are used to explain the present application. Some structures related to the present application are shown in the accompanying drawings for convenience of description.

In the description of the present application, unless otherwise expressly specified and limited, the term "connected to each other", "connected", or "fixed" is to be construed in a broad sense. For example, the term "connected" may refer to "fixedly connected" or "detachably connected" or "integrally connected", may refer to "mechanically connected" or "electrically connected", or may refer to "connected directly", "connected indirectly through an intermediary" or "internal connection between two elements, or interaction between two elements ". For those of ordinary skill in the art, meanings of the preceding terms in the present application may be understood based on situations.

In the present application, unless otherwise expressly specified and limited, a first feature being "on" or "under" a second feature may include the first feature and the second feature being in direct contact, or may include the first feature and the second feature not being in direct contact but being in contact with each other through an additional feature therebetween. Moreover, the first feature being "on", "above" or "over" the second feature includes the first feature being directly on, above or over and obliquely on, above or over the second feature, or simply indicates that the first feature is at a higher level than the second feature. The first feature being "under", "below" or "underneath" the second feature includes the first feature being directly under, below or underneath and obliquely under, below or underneath the second feature, or simply represents that the first feature is at a lower level than the second feature.

In the description of this embodiment, the orientational or positional relationships indicated by terms "above", "below", "left", "right", and the like are based on the orientational or positional relationships shown in the drawings, and are merely for ease of description and simplifying an operation, rather than indicating or implying that the referred device or element must have a specific orientation and be constructed and operated in a specific orientation. Moreover, the terms "first" and "second" are used only to distinguish between descriptions and have no special meaning.

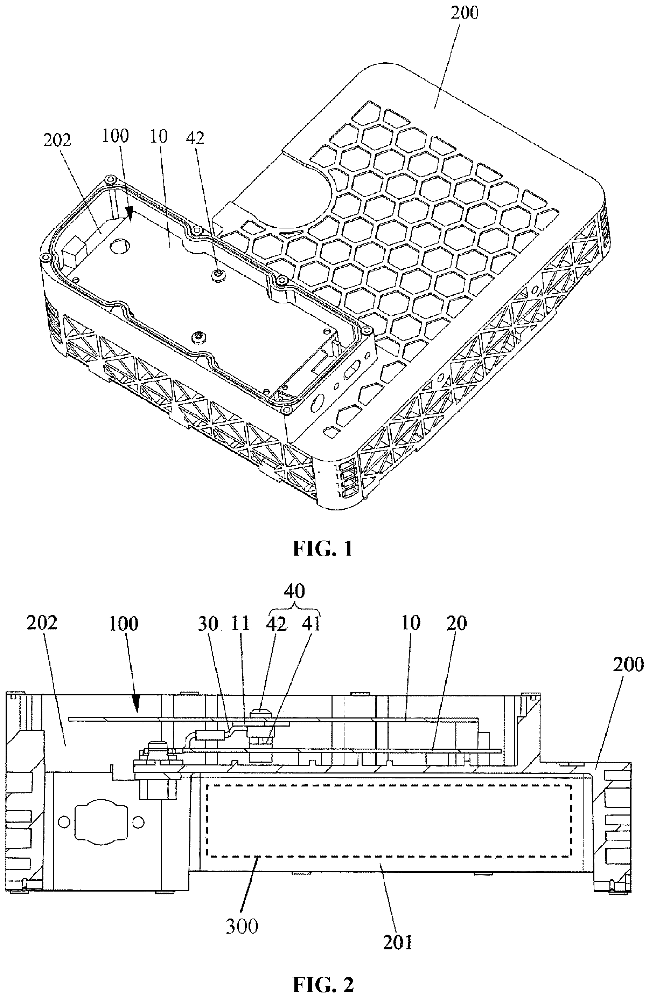

This embodiment provides a battery management system 100 and a battery pack. As shown in FIGS. 1 and 2, the battery pack includes a box body 200, a battery module 300 and the battery management system 100 in any of the embodiments. The battery module 300 and the battery management system 100 are disposed within the box body 200. In some embodiments, an interior space of the box body 200 is divided into a first receiving cavity 201 and a second receiving cavity 202, the battery module 300 is disposed within the first receiving cavity 201, the battery management system 100 is disposed within the second receiving cavity 202, and the battery management system 100 is electrically connected to the battery module 300 to perform the intelligent management and maintenance on the battery module 300.

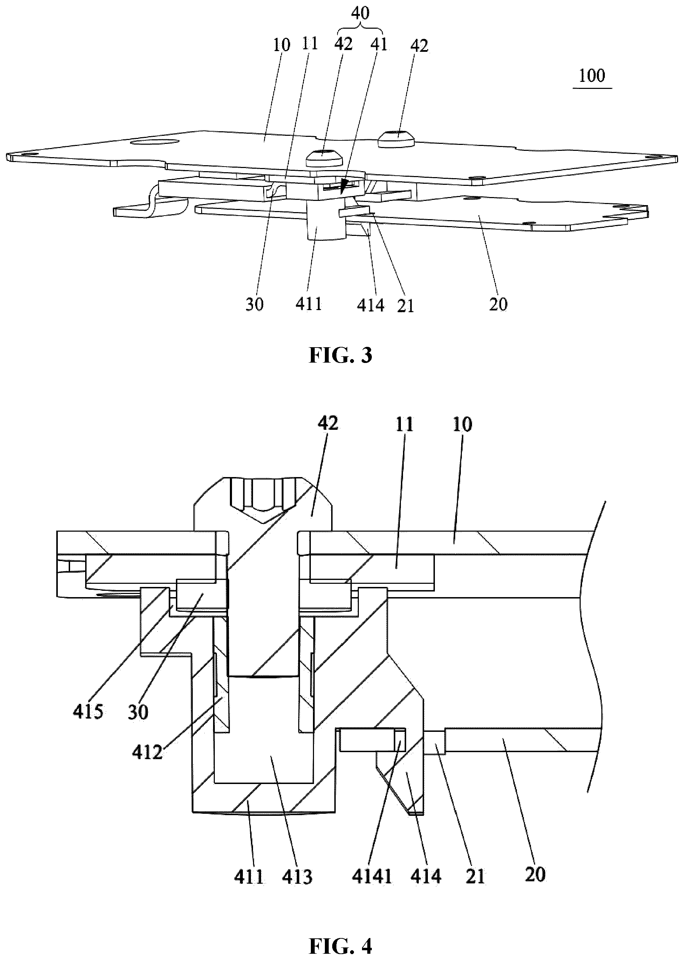

In some embodiments, as shown in FIGS. 2 and 3, the battery management system 100 includes a first circuit board 10, a second circuit board 20, a copper bar 30 and a fastening assembly 40. The first circuit board 10 and the second circuit board 20 are arranged at intervals in a vertical direction and are fixed within the box body 200. The copper bar 30 is located between the first circuit board 10 and the second circuit board 20. The fastening assembly 40 includes an insulating member 41 and a first fastener 42. The copper bar 30 is disposed to be attached to the first circuit board 10. A first end of the insulating member 41 is connected to the second circuit board 20, and a second end of the insulating member 41 supports the copper bar 30. The first fastener 42 is fastenably connected to the insulating member 41 and abuts against a side of the first circuit board 10 away from the second circuit board 20, to fix the copper bar 30 on the first circuit board 10.

According to the battery management system 100 provided in this embodiment, the first circuit board 10 and the second circuit board 20 are arranged at intervals in a vertical direction and are fixed within the box body 200, the copper bar 30 is supported by the insulating member 41 connected to the second circuit board 20, and the fastener 42 is fastenably connected to the insulating member 41, so that the copper bar 30 is attached and fixed on a side of the first circuit board 10 by using the pre-tightening force. The fastening assembly 40 of the above-described form is provided so that the copper bar 30 can be insulated from the box body 200 while the copper bar 30 is fastened, and the first fastener 42 is not in contact with the box body 200; therefore, the copper bar 30 may not form an electrical connection with the box body 200 through the first fastener 42, thereby insulating and protecting the box body 200 without using the electrophoresis process, and reducing the manufacturing cost.

To fix the first circuit board 10 and the second circuit board 20 inside the box body 200, in some embodiments, multiple connection columns are disposed at a cavity bottom of the second receiving cavity 202, a threaded hole is disposed within each of the multiple connection columns, each of the first circuit board 10 and the second circuit board 20 is placed on a respective one among the multiple connection columns, and then a screw is disposed to penetrate through the first circuit board 10 or the second circuit board 20 and is in threaded connection with the threaded hole on each connection column of the multiple connection columns, so that each of the first circuit board 10 and the second circuit board 20 is fixed within the box body 200.

In some embodiments, a first end of the copper bar 30 is attached and connected to the first circuit board 10 through the fastening assembly 40, and a second end of the copper bar 30 is electrically connected to the battery module 300. For an electrical connection manner between the copper bar 30 and the battery module 300, reference may be made to the related art. As shown in FIGS. 2 and 3, a side of the first circuit board 10 facing the copper bar 30 is provided with a pad 11, and the copper bar 30 is attached to an exposed copper layer of the pad 11, so that an electrical connection between the copper bar 30 and the first circuit board 10 is achieved. The copper bar 30 and the second circuit board 20 are disposed to be insulated from each other through the insulating member 41. The first circuit board 10 may be electrically connected to the second circuit board 20 through a board end connector, a wire, a flexible printed circuit (FPC) and other structures. The number of copper bars 30 is set to two, two second ends of two copper bars 30 are electrically connected to the positive electrode and the negative electrode of the battery module 300, respectively, and two first ends of the two copper bars 30 are fastenably connected to the first circuit board 10 through the fastening assembly 40 in the above-described embodiments. The first circuit board 10 is a power board and may pass a large current, and the second circuit board 20 may pass a low current. The current from the battery module 300 flows out through the copper bar 30, and then is output to a powered device through the first circuit board 10.

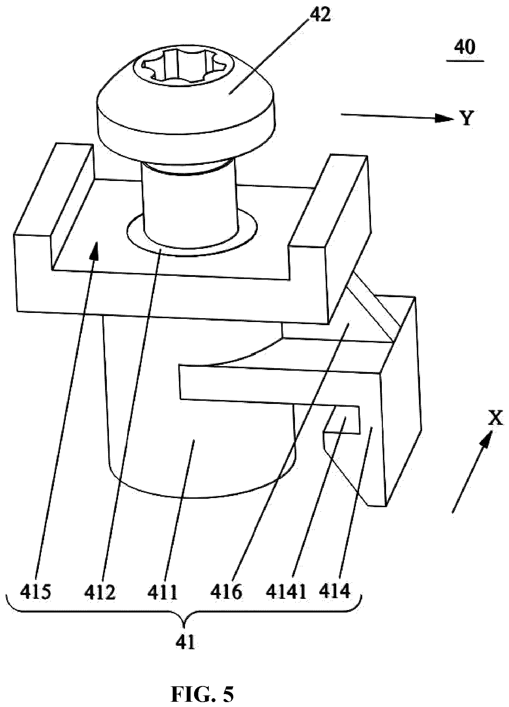

In an optional embodiment, after the first fastener 42 is disposed to penetrate through the first circuit board 10 and the copper bar 30 in sequence, the first fastener 42 is in threaded connection with the insulating member 41. In some embodiments, as shown in FIGS. 4 and 5, the insulating member 41 includes a plastic member 411 and a second fastener 412 embedded within the plastic member 411. A first end of the plastic member 411 is fixed on the second circuit board 20, and a second end of the plastic member 411 supports the copper bar 30, so that an insulation connection between the copper bar 30 and the second circuit board 20 is achieved. A portion disposed to support the copper bar 30 of the plastic member 411 is a square structure, and another portion of the plastic member 411 is a cylindrical structure. A through hole for the first fastener 42 to penetrate through is disposed on the first circuit board 10 and the copper bar 30, and the first fastener 42 is disposed to penetrate through the first circuit board 10 and the copper bar 30 in sequence and then is in threaded connection with the second fastener 412 to satisfy the pre-tightening function. The first fastener 42 is screwed so that a head of the first fastener 42 abuts against the side of the first circuit board 10 away from the second circuit board 20. A side of the copper bar 30 is tightly attached to a side of the first circuit board 10 facing the second circuit board 20, and another side of the copper bar 30 is supported by an end of the plastic member 411, whereby the fastening effect of the copper bar 30 is achieved. In this embodiment, the first fastener 42 is a screw, the second fastener 412 is a nut, a threaded rod portion of the screw is disposed to penetrate through the first circuit board 10 and the copper bar 30 in sequence and then is in threaded connection with the nut, and a head of the screw abuts against the side of the first circuit board 10 away from the second circuit board 20.

In another optional embodiment, a hole site may be reserved on the plastic member 411, and then a threaded hole may be formed by tapping in the hole site. The first fastener 42 may be a screw. A threaded rod portion of the screw is disposed to penetrate through the first circuit board 10 and the copper bar 30 in sequence and is in threaded connection with the threaded hole on the plastic member 411, and a head portion of the screw abuts against on the side of the first circuit board 10 away from the second circuit board 20, so that the fastening effect of the copper bar 30 can also be achieved. In this implementation, the second fastener 412 does not need to be embedded within the plastic member 411.

In another optional embodiment, the first fastener 42 may also be selected as a self-tapping screw. After the self-tapping screw is disposed to penetrate through the first circuit board 10 and the copper bar 30 in sequence, the self-tapping screw is tightened directly by using a tool, so that threads can be automatically formed in the reserved hole of the plastic member 411 during rotation, whereby the fastening effect of the copper bar 30 can also be achieved without the aid of the nut or the pre-tapping. Moreover, in this implementation, the second fastener 412 does not need to be embedded within the plastic member 411.

In another optional embodiment, the insulating member 41 is disposed to penetrate through the copper bar 30 and the first circuit board 10 in sequence, and then is in threaded connection with the first fastener 42. In some embodiments, the insulating member 41 includes a plastic member 411 and a second fastener 412 embedded within the plastic member 411, and the second fastener 412 is disposed to penetrate through the copper bar 30 and the first circuit board 10 in sequence and then is in threaded connection with the first fastener 42 to satisfy the pre-tightening function. In some embodiments, the first fastener 42 may be the nut, the second fastener 412 may be the bolt. The bolt is embedded within the plastic member 411. During mounting, a stud portion of the bolt is disposed to penetrate through the copper bar 30 and the first circuit board 10 in sequence, then the nut is screwed onto the bolt, and the nut abuts against the side of the first circuit board 10 away from the second circuit board 20, so that the fastening effect of the copper bar 30 can also be achieved.

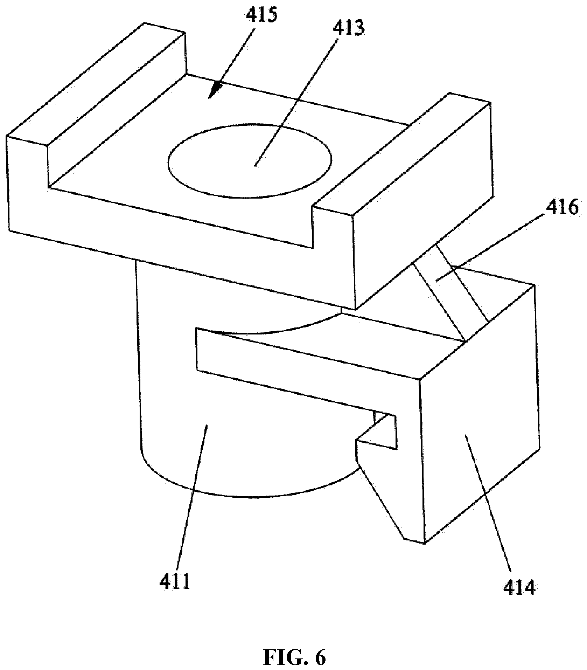

As shown in FIGS. 4 and 6, in this embodiment, a receiving hole 413 is disposed within the plastic member 411, and the second fastener 412 is embedded within the receiving hole 413, and the receiving hole 413 is a blind hole. The first fastener 42 in this embodiment is the screw and the second fastener 412 in this embodiment is the nut; therefore metal debris is generated within the nut when the screw is screwed, and moreover, the receiving hole 413 is disposed to be the blind hole, so that the metal debris can be directly dropped into the blind hole. Compared with a setting that the receiving hole 413 is the through hole, a phenomenon that the metal debris is attached to the second circuit board 20 to cause the short circuit can be avoided.

As shown in FIGS. 3 and 4, an engaging hole 21 is disposed on the second circuit board 20, a snap 414 is disposed on a circumferential side of the plastic member 411, and the snap 414 is engaged within the engaging hole 21. The snap 414 and the plastic member 411 are of an integrally formed structure, and the snap 414 may be assembled with the engaging hole 21 through the elastic deformation of the snap 414 itself and is finally engaged within the engaging hole 21, so that the plastic member 411 is firmly connected to the second circuit board 20, and thus the assembling and disassembling are relatively convenient.

In some embodiments, as shown in FIGS. 4 and 5, a side of the snap 414 facing the plastic member 411 is bent to form an engaging groove 4141. After the snap 414 passes through the engaging hole 21, a side edge of the second circuit board 20 is engaged within the engaging groove 4141, so that a stable connection between the plastic member 411 and the second circuit board 20 is achieved, and the disassembly and assembly is convenient.

In some embodiments, the mounting process of the battery management system 100 is as follows. The snap 414 on the circumferential side of the plastic member 411 is firstly engaged into the engaging hole 21 of the second circuit board 20, so that the plastic member 411 and the second circuit board 20 are assembled into one piece, where the plastic member 411 is the plastic member 411 into which the second fastener 412 has been embedded. After the assembly, the plastic member 411 and the second circuit board 20 are integrated into the box, the second circuit board 20 is locked within the box body 200 through screws, then the copper bar 30 is placed on the plastic member 411, and then the first circuit board 10 is placed on the copper bar 30, so that the first circuit board 10 tightly presses the copper bar 30. In this case, the through hole on the first circuit board 10 is aligned with the through hole on the copper bar 30, the first fastener 42 is disposed to penetrate through the through hole of the first circuit board 10 and the through hole of the copper bar 30 in sequence and is then in threaded connection with the second fastener 412 embedded within the plastic member 411 to lock the first fastener 42, whereby the copper bar 30 is attached and fixed on the first circuit board 10, and finally, the first circuit board 10 is locked within the box body 200 by screws. After the battery management system 100 is assembled, the whole box body 200 is turned over, so that an opening of the first receiving cavity 201 faces upwards, and then the battery module 300 is mounted.

As shown in FIG. 5, the snap 414 is widened in an X-axis direction. The snap 414 is widened, so that the structural strength of the snap 414 can be enhanced, and the snap 414 is prevented from being deformed or damaged when the first fastener 42 is screwed, thereby preventing the plastic member 411 from following the rotation.

Referring to FIG. 4 to FIG. 6, an end of the plastic member 411 facing the copper bar 30 is provided with a limit groove 415, and the copper bar 30 is accommodated within the limit groove 415. The limit groove 415 is configured to limit the copper bar 30, and after the copper bar 30 is placed within the limit groove 415, the copper bar 30 can be prevented from shaking and shifting in a Y direction.

As shown in FIGS. 5 and 6, a stiffener 416 is disposed on a circumferential side wall of the plastic member 411, the stiffener 416 is connected between a top side of the snap 414 and a bottom side of the square structure of the plastic member 411, and the plastic member 411, the stiffener 416 and the snap 414 are all of an integrally formed structure. The stiffener 416 is provided so that the overall structural strength of the plastic member 411 can be improved to prevent the snap 414 from being deformed or damaged when the first fastener 42 is screwed.

## Claims

1. A battery management system, disposed within a box body (200), wherein the battery management system comprises:
a first circuit board (10) and a second circuit board (20) which are arranged at intervals and fixed within the box body (200);
a copper bar (30) located between the first circuit board (10) and the second circuit board (20); and
a fastening assembly (40), comprising an insulating member (41) and a first fastener (42), wherein the copper bar (30) is disposed to be attached to the first circuit board (10), a first end of the insulating member (41) is connected to the second circuit board (20), a second end of the insulating member (41) supports the copper bar (30), and the first fastener (42) is fastenably connected to the insulating member (41) and abuts against a side of the first circuit board (10) away from the second circuit board (20), to fix the copper bar (30) on the first circuit board (10).

2. The battery management system of claim 1, wherein the first fastener (42) is disposed to penetrate through the first circuit board (10) and the copper bar (30) in sequence and is then in threaded connection with the insulating member (41); or
the insulating member (41) is disposed to penetrate through the copper bar (30) and the first circuit board (10) in sequence and is then in threaded connection with the first fastener (42).

3. The battery management system of claim 1, wherein the insulating member (41) comprises a plastic member (411) and a second fastener (412) embedded within the plastic member (411), a first end of the plastic member (411) is fixed on the second circuit board (20), a second end of the plastic member (411) supports the copper bar (30), and the first fastener (42) is connected to the second fastener (412).

4. The battery management system of claim 3, wherein the first fastener (42) is a screw, the second fastener (412) is a nut, and the screw is disposed to penetrate through the first circuit board (10) and the copper bar (30) in sequence and is in threaded connection with the nut.

5. The battery management system of claim 3, wherein a receiving hole (413) is disposed within the plastic member (411), the second fastener (412) is embedded within the receiving hole (413), and the receiving hole (413) is a blind hole.

6. The battery management system of any one of claims 1 to 5, wherein an engaging hole (21) is disposed on the second circuit board (20), a circumferential side of the insulating member (41) is provided with a snap (414), and the snap (414) is engaged into the engaging hole (21).

7. The battery management system of claim 6, wherein an engaging groove (4141) is formed on the snap (414), and after the snap (414) penetrates through the engaging hole (21), a side edge of the second circuit board (20) is engaged within the engaging groove (4141).

8. The battery management system of any one of claims 1 to 5, wherein an end of the insulating member (41) facing the copper bar (30) is provided with a limit groove (415), and the copper bar (30) is accommodated within the limit groove (415).

9. The battery management system of any one of claims 1 to 5, wherein a stiffener (416) is disposed on a circumferential side wall of the insulating member (41).

10. A battery pack, comprising a box body (200), a battery module (300) and the battery management system (100) of any one of claims 1 to 9, wherein the battery module (300) and the battery management system (100) are disposed within the box body (200), and the battery module (300) is electrically connected to the battery management system (100).
